# EUROPEAN PATENT APPLICATION

(11) **EP 1 266 568 A1**
(43) Date of publication of application: **18.12.2002**
(21) Application number: 02012447.5
(22) Date of filing: 10.06.2002
(51) Int. Cl.: A01K 63/00

(54) **Aquarium, in particular for home use**

(30) Priority: 12.06.2001 IT TO20010565
(71) Applicant: Vecchio, Antonio, 10090 San Giusto Canavese (IT); Tappero, Alberto, 10010 Mercenasco (IT)
(72) Inventor: Vecchio, Antonio, 10090 San Giusto Canavese (IT)
(74) Representative: Cerbaro, Elena

(57) **Abstract**

An aquarium (1), in particular for home use, has a first chamber (10) for housing a mass of liquid; an empty second chamber (20); and a conducting unit (28) for transferring at least part of the mass of liquid from one chamber to the other (10) (20) by forming a vacuum in the second chamber (20).

## Description

The present invention relates to an aquarium, in particular for home use.

As is known, aquariums comprise an open-topped, parallelepiped-shaped tank filled with water containing fish and/or aquatic plants.

Home aquariums are normally relatively small in height, preferably ranging between 0.3 and 0,5 of a meter, to permit easy access to the inside of the tank from the top, whereas certain types or large numbers of fish require a relatively large, and therefore higher, aquarium.

Using known relatively high, parallelepiped-shaped aquariums, however, routine cleaning of the inside and maintenance of the filters, ornaments and devices normally immersed in the water are fairly difficult, and the bottom of the tank, in particular, is practically impossible to reach at arm's length.

Known types of aquariums therefore not only call for special implements with extension rods, which are normally awkward to handle, but also, at times, for draining off all the water to clean and service the tank.

It is an object of the present invention to provide an aquarium, in particular for home use, designed to provide a straightforward, low-cost solution to the above problems.

According to the present invention, there is provided an aquarium, in particular for home use, as claimed in Claim 1.

A non-limiting embodiment of the invention will be described by way of example with reference to the accompanying drawings, in which:
Figure 1 shows a view in perspective of a preferred embodiment of the aquarium, in particular for home use, according to the present invention;
Figure 2 shows a schematic section, with parts removed for clarity, of a detail of Figure 1 along line II-II;
Figure 3 shows a larger-scale plan view, with parts removed for clarity, of the Figure 1 aquarium and a variation of the Figure 2 detail;
Figure 4 shows a smaller-scale, partial section along line IV-IV in Figure 3.

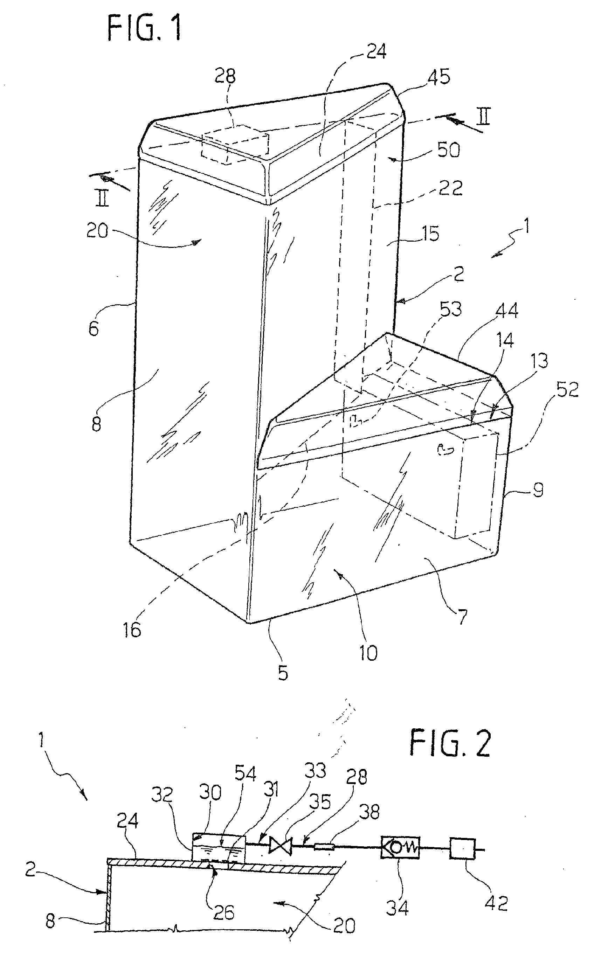

Number 1 in Figure 1 indicates an aquarium, in particular for home use, comprising a structure or tank 2, which is filled with water for housing fish and/or aquatic plants, and is defined by flat sheets of transparent material, preferably glass, fixed to one another in fluidtight manner, e.g. by means of silicone.

As shown in the accompanying drawings, structure 2 comprises a rectangular bottom or supporting sheet 5, from which extend vertically a rear sheet 6, a front sheet 7 facing and parallel to sheet 6, and two parallel, facing lateral sheets 8 and 9, all of which are rectangular and define a parallelepiped-shaped bottom chamber 10.

Chamber 10 communicates with the outside through a triangular top opening 13 defined by the top edges 14 of sheets 7 and 9, and by a rectangular vertical sheet 15 extending between the edges of sheets 6 and 8, i.e. along a diagonal of sheet 5, and separated vertically from sheet 5.

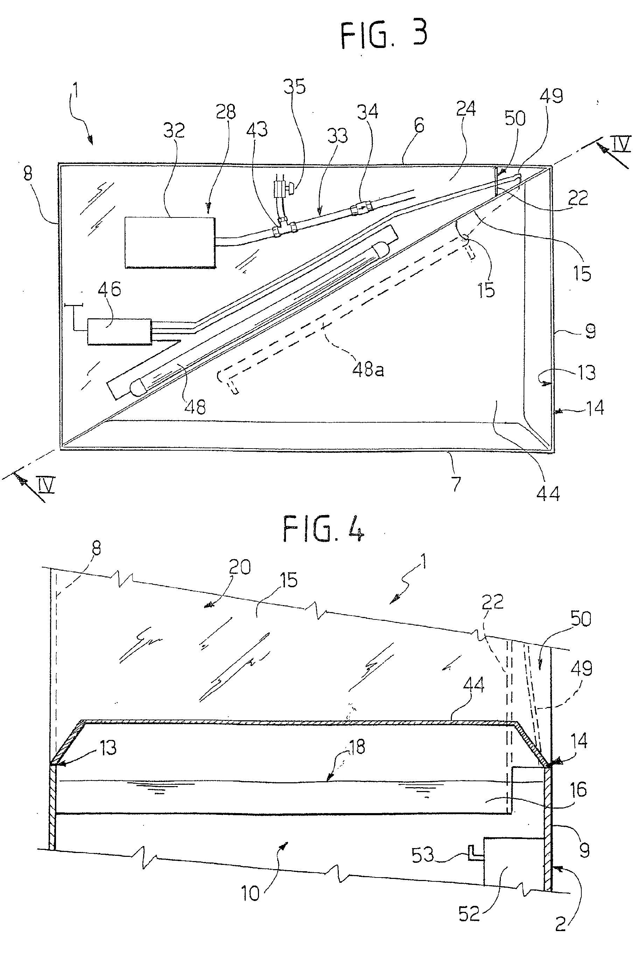

With reference to Figures 1 and 4, sheet 15 comprises a rectangular bottom end portion 16, which extends inside chamber 10, below edges 14, to separate, in use, the free surface 18 of the water at opening 13 from the portion of water inside an auxiliary chamber 20.

Chamber 20 is defined laterally by sheets 6 and 8, which are over twice the height of sheets 7 and 9; by sheet 15; and by a rectangular vertical tongue or sheet 22 facing and parallel to sheet 8.

With particular reference to Figure 2, chamber 20 is closed at the top by a trapezoidal sheet 24, which is parallel to and faces sheet 5, has a through hole 26, and is fitted on top with a fluid-conducting unit 28.

Unit 28 is fitted in fluidtight manner to sheet 24, is used to form a vacuum in chamber 20 and so transfer part of the water from chamber 10 to chamber 20, on the basis of the principle of communicating vessels, and comprises a compensating chamber 30, in which hole 26 terminates.

Chamber 30 has a fairly small capacity as compared with chamber 20, houses a barrier net 31 for keeping out the fish in the vicinity of hole 26, and is defined by a casing 32, a top end portion of which is fitted with a lateral conduit 33 (shown schematically) forming part of unit 28.

Conduit 33 communicates in fluidtight manner with chamber 30, and comprises a one-way valve 34, and an open-close tap 35 interposed in series between valve 34 and chamber 30. Valve 34 is connected in fluidtight manner to tap 35 by a releasable fast-fit coupling 38, and prevents air entering chambers 20 and 30, even when tap 35 is open.

With reference to Figure 2, conduit 33 may be connected in fluidtight manner to a vacuum pump 42 (shown schematically); whereas, in the Figure 3 variation, valve 34 and tap 35 may be connected in parallel by a tee fitting 43.

As shown in Figures 1 and 3, aquarium 1 also comprises two triangular lids 44, 45 : lid 44 rests against edges 14 and sheet 15 to close opening 13; and lid 45 covers sheet 24 to house unit 28, a central control unit 46 for supplying electric current, and a lamp, e.g. a neon lamp, 48 powered by central control unit 46.

Central control unit 46 also powers vacuum pump 42 and a lamp 48a, which is fitted to cover 44 (Figure 3), is positioned facing surface 18, and is connected to central control unit 46 by a bundle of cables 49 running along a triangular vertical channel 50, which is defined by sheets 6 and 15 and by tongue 22, is located alongside and insulated from chamber 20, contains no water in use, and may also be used for routing oxygen tubes (not shown).

With reference to Figures 1 and 4, aquarium 1 also comprises an outlet (not shown) for draining the water from chamber 10; and a water filtering and recirculating device 52 housed inside chamber 10, adjacent to sheet 9, and having a jet 53 facing chamber 20.

In actual use, to fill structure 2, water is poured into chamber 10 through opening 13 up to a level defined by portion 16, which separates surface 18 from the free surface of the portion of water between sheets 6, 8, 15 and tongue 22.

At this point, a vacuum is formed in chamber 20 by withdrawing air along conduit 33 and, in particular, through valve 34 by means of vacuum pump 42 or, more simply, by mouth. With reference to Figure 2, during suction, tap 35 is left open, whereas, in the Figure 3 variation, tap 35 is kept closed.

The vacuum formed in the empty chamber 20 causes water to be transferred from chamber 10 to chamber 20, so as to increase the hydrostatic pressure on the level defined by surface 18, and so balance the atmospheric pressure exerted on surface 18 through opening 13.

As water continues to be poured into chamber 10 and air to be withdrawn through unit 28, water is gradually transferred from chamber 10 to chamber 20, until chamber 20 is completely full.

In the same way, chamber 30 is also partly filled to a final level 54 (Figure 2), so that chamber 30 contains a small amount of water to compensate for the portion eventually evaporating from surface 18.

During any pause in suction, valve 34 prevents the outside air from entering chamber 30 and so increasing the pressure in the gap remaining in chambers 20, 30; and, once the fill operation is completed, tap 35 (Figure 2) is closed to prevent any air leakage from conduit 33.

To drain the water from chambers 10, 20, 30, atmospheric pressure must be restored in the gap in chambers 20, 30, so as to transfer the water from chamber 20 back into chamber 10. This is done, with reference to Figure 2, by simply removing valve 34 and opening tap 35, and, in the Figure 3 variation, by simply opening tap 35.

To clean and maintain chamber 10, in particular bottom sheet 5, cover 44 is therefore simply removed to obtain access to chamber 10 through opening 13. Given the relatively low height of opening 13 and surface 18 with respect to sheet 5, the bottom of aquarium 1 can be reached easily at arm's length, with no need for special implements or for draining the water from aquarium 1.

At the same time, aquarium 1 has a much greater capacity as compared with known solutions, by virtue of chamber 20, and therefore a large amount of water in which the fish can swim freely. On the other hand, structure 2 is straightforward and compact, comprises no moving parts, is relatively cheap to produce, and imparts to aquarium 1 an original look, in particular by allowing the fish to swim over chamber 10 and opening 13, and between chambers 10 and 20 underneath portion 16. The particular design of structure 2 does not, however, prevent the use of standard commercial filters, devices and/or ornaments.

Channel 50 enables tubes and cables to be routed easily through structure 2; the location of jet 53 provides for also effectively recirculating water into chamber 20; any bubbles escape through surface 18, i.e. at opening 13; and net 31 prevents access to unit 28 by the fish, but without impairing the look of aquarium 1, by being located inside chamber 30.

Clearly, changes may be made to aquarium 1 as described and illustrated herein without, however, departing from the scope of the present invention.

In particular, aquarium 1 may be shaped differently, e.g. may have two chambers 10, 20 spaced apart, and/or may comprise more than one chamber 20 in which a vacuum can be formed.

Moreover, a device other than unit 28 may be provided to transfer water between chambers 10 and 20; vacuum pump 42 may be dispensed with; and/or a device may be provided for temporarily isolating one chamber 10, 20 from the other and draining off part of aquarium 1.

## Claims

1. An aquarium (1), in particular for home use, comprising a first chamber (10) for housing a mass of liquid; **characterized by** also comprising an empty second chamber (20), and conducting means (28) for transferring at least part of said mass of liquid from one chamber to the other (10)(20).

2. An aquarium as claimed in Claim 1, **characterized in that** said first and said second chamber (10) (20) communicate permanently with each other.

3. An aquarium as claimed in Claim 2, **characterized in that** said second chamber (20) is formed at a height greater than that of said first chamber (10) with respect to a bottom wall (5) of the first chamber (10).

4. An aquarium as claimed in Claim 3, **characterized in that** said conducting means (28) comprise channeling means (33) for forming a vacuum in the second chamber (20).

5. An aquarium as claimed in Claim 4, **characterized by** having a single access opening (13) formed in said first chamber (10).

6. An aquarium as claimed in Claim 4 or 5, **characterized in that** said second chamber (20) has an opening (26) at a top end; and **in that** said channeling means (33) communicate in fluidtight manner with said opening (26), and comprise on-off means (34, 35) for at least preventing air from entering said second chamber (20) through the opening (26).

7. An aquarium as claimed in Claim 6, **characterized in that** said on-off means (34, 35) comprise closing means (35) for selectively enabling and disabling airflow through said opening (26); and one-way means (34) for preventing inflow of air through said opening (26).

8. An aquarium as claimed in Claim 7, **characterized in that** said closing means (35) are interposed in series between said one-way means (34) and said opening (26); and **in that** said one-way means (34) are removable to permit inflow of air through said opening (26).

9. An aquarium as claimed in any one of Claims 6 to 8, **characterized in that** said conducting means (28) comprise a compensating chamber (30) formed at the top of said second chamber (20), between said channeling means (33) and said opening (26).

10. An aquarium as claimed in any one of Claims 4 to 9, **characterized by** comprising barrier means (31) for preventing the passage of fish from said second chamber (20) to said channeling means (33).

11. An aquarium as claimed in Claims 9 and 10, **characterized in that** said barrier means (31) comprise a net (31) housed in said compensating chamber (30) and at said opening (26).

12. An aquarium as claimed in any one of Claims 4 to 11, **characterized in that** said conducting means (28) also comprise a vacuum pump (42).

13. An aquarium as claimed in any one of Claims 3 to 12, **characterized in that** said second chamber (20) is formed over said first chamber (10).

14. An aquarium as claimed in Claim 13, **characterized in that** said second chamber (20) is defined laterally by a sheet (15) comprising an end portion (16) extending downwards into said first chamber (10) to separate, in use, two free surfaces (18, 54) of said mass of liquid.

15. An aquarium as claimed in Claim 14, **characterized by** having a quadrangular bottom wall (5); said sheet (15) extending along a diagonal of said bottom wall (5), and being separated vertically from said bottom wall (5).

16. An aquarium as claimed in any one of Claims 13 to 15, **characterized by** comprising liquid recirculating means (52) housed in said first chamber (10) and having an outlet (53) facing said second chamber (20).

17. An aquarium as claimed in any one of the foregoing Claims, **characterized in that** said first and said second chamber (10, 20) are defined by sheets (5, 6, 7, 8, 9, 15, 22) of transparent material; and by comprising a channel (50) containing, in use, no said liquid, and defined by some of said sheets (6, 15, 22).

18. An aquarium as claimed in Claim 16, **characterized in that** said channel (50) defines a vertical passage alongside said second chamber (20).
